# EUROPEAN PATENT SPECIFICATION

(11) **EP 2 867 187 B1**
(45) Date of publication and mention of the grant of the patent: **27.04.2016**
(21) Application number: 13742167.3
(22) Date of filing: 25.06.2013
(51) Int. Cl.: C04B 41/89, C03C 17/34, C23D 5/02

(54) **METHOD FOR OBTAINING OPTICAL INTERFERENCE EFFECTS BY MEANS OF DIGITAL INK-JET TECHNIQUE**
VERFAHREN ZUM ERZIELEN OPTISCHER INTERFERENZEFFEKTE MITTELS DIGITALER TINTENSTRAHLTECHNIK
PROCÉDÉ PERMETTANT D'OBTENIR DES EFFETS D'INTERFÉRENCE OPTIQUE AU MOYEN D'UNE TECHNIQUE PAR JET D'ENCRE NUMÉRIQUE

(30) Priority: 28.06.2012 EP 12382258
(43) Date of publication of application: 06.05.2015
(73) Proprietor: Colorobbia España, S.A., 12192 Vilafamés - Castellón (ES)
(72) Inventor: JUNCOSA GASCÓ, Elena, E-12192 Vilafamés - Castellón (ES); NEBOT APARICI, Antonio, E-12192 Vilafamés - Castellón (ES); PEIRÓ BENAZET, David, E-12192 Vilafamés - Castellón (ES); SERENI, Sergio, E-12192 Vilafamés - Castellón (ES)
(74) Representative: ABG Patentes, S.L.
(86) International application number: PCT/EP2013/063245
(87) International publication number: WO 2014/001315

(56) References cited:
- GB-A- 2 353 485
- FERRO SPAIN, S.A.: "Tintas Ink-Jet para Decoracion 3D", BOL. SOC. ESP. CERAM. VID., vol. 50, no. 2, 1 March 2012 (2012-03-01), pages XXVII-XXX, XP002686649, cited in the application

## Description

### Field of the Invention

The present invention relates to a method for obtaining optical interference effects by means of the digital ink-jet technique. Said method involves applying ink-jet inks with a high refraction index on a sub-micrometric laminar interphase with a low refraction index. The invention additionally comprises a ceramic, glass or metallic product decorated by means of said method.

### Background

In the last two decades considerable effort has been made in developing surface coatings for aesthetic finishes in decorative parts in the ceramic industry. Apart from colour finishes by means of adding absorption pigments, different ceramic finishes or effects can be seen on many occasions such as the matte effect, gloss effect, lustrous effect, metallic effect, etc., which are highly valued since they provide great added commercial value to the end product.

Lead glazes as described for example in patent ES2301364B1 are among the different widely known mechanisms for obtaining effects of this type. However, these materials have high lead contents giving rise to great limitations because of toxicity problems.

New techniques, such as vapour phase deposition, have also recently been developed for obtaining coatings with a metallic appearance as described for example in patent EP1498402A1. These finishes are produced as a result of depositing a metal layer of elements such as chromium, zirconium, tantalum, titanium and nitrides or carbides of said elements. The limitations of this technique are that previously worked parts are required and the difficulty of decorating the parts beyond the metal coating.

This is why a series of formulations and methodologies with the aim of eliminating said limitations existing up until now have appeared in the ceramic sector in the last few years. European patent EP1306355 of Vidres S.A. describes a composition for obtaining metallic effects in ceramic tiles comprising a mixture of oxides such as SiO₂, Al₂O₃, Fe₂O₃ and P₂O₅, together with other optional oxides. These compositions are characterised by being free of noble metals (which increase the cost of the formulations), but contain phosphorus pentoxide giving rise to phosphate glasses which have a high solubility in aqueous medium. Therefore, their use in floorings and coverings strongly limits their application.

For the purpose of overcoming these chromatic and application limitations, formulations of frits and enamels giving rise to obtaining metallic lustres with different chromatic tones after firing have been proposed. These frits or enamels are based on mixtures of different metal oxides, as described for example in patent ES2310139A1. Said specification describes a formulation of particles with a micro/nanometric size of different metals, metal oxides and alloys, homogeneously mixed with ceramic frits, carbon powder and other additives. Generating a local and transient reducing atmosphere within the furnace during the ceramic tile firing process, achieved by means of adding carbon powder, is necessary for obtaining said effect. However, creating a reducing atmosphere within the furnace during the industrial firing of the ceramic tiles (oxidizing firing) has limitations in terms of stability of tones obtained.

So-called effect pigments or interference pigments giving rise to the perception of a surface with different tones depending on the angle of light have also been developed. Said effect pigments include aluminium flake particles providing the metallic lustre effect have been thoroughly described. They are usually mixed with a small part of absorption pigments. Finishes such as metallic blue, metallic green, or as metallic grey are thus obtained.

As a result of the constant search for new ceramic finishes, other effects neither due to the formation of crystals, nor to the introduction of inks or pigments on the treated surfaces, but due to phenomena of light interacting with the materials which are called interference effects or multi-colour iridescence have been observed.

It could broadly be said that the effects, such as the metallic effect, mainly cause changes in clarity, while interference effects also cause changes in the shade and in the saturation of the colour.

Said interference effects have been obtained in the state of the art by means of refracting light through materials with different refraction indexes as described for example in patent application EP1572812A1 of Merck Gmbh. This document makes reference to obtaining interference pigments by means of a complex system consisting of alternating different types of materials in the form of scales and comprising a silica layer, a metal oxide coating, preferably of TiO₂ with a high refraction index (n>1.8), and an interference system consisting of alternating layers with high and low refraction indexes, consisting of metal oxides or the corresponding hydrated oxides, preferably interference layers formed by TiO₂-SiO₂-TiO₂.

Obtaining interference effects by means of diffracting light caused by irregularities which the light encounters in its trajectory has also been described. Vidres S.A. has developed a range of products for decorating ceramic tiles characterised in that after its application on a ceramic substrate and subsequent firing, a microcrack or notch structure in said coatings is generated causing a multi-colour iridescent effect to appear. Said microcracks must be generated between the particles and an enamelled surface.

These effects have also been related to constructive and destructive interference phenomena which occur in double-layer or triple-layer structures. Vidres S.A. (Bol. Soc. Esp. Ceramic. Vid. 2010, 49 (2), 142-146) has studied these phenomena in aventurine glazes, which are laminar crystals distributed randomly in a transparent glass matrix. A sparkling effect occurs when light strikes these laminar crystals and due to the difference of the refraction index of these with respect to the matrix.

### Optical Effects and Digital Ink-jet Technique

In the last few years there has been an increase in the production of ceramic products decorated by digital ink-jet technique. The digital ink-jet technique is a printing technique consisting of projecting small drops directly onto a specified position in a substrate for creating an image.

Among the advantages of this technique is the possibility of decorating with a high image definition and contactless, the capability of adapting to any type of format and relief, the great graphic versatility because of the larger size of the designs. This technique also has advantages at a production level due to reduced development costs since the number of tests, the time invested and costs of fungible and consumable items typical of conventional decorations are reduced. This is why the ink-jet technique has become the most widely used at all levels when printing digital images is required, having greatly replaced other digital techniques (ink sublimation, digital xerography, etc.).

However, the digital ink-jet technique also has deficiencies or drawbacks such as the smaller chromatic range of inks with respect to the classic decoration systems. Chromatic development and ink consumption depend on the chemical composition of the enamel on which it is applied and on the firing cycle, therefore the composition of the enamels must be optimised and production deviations must be minimal and controlled so that graphic files do not have to be constantly touched up.

Furthermore, up until now ink-jet decorating had been limited to achieving a high definition design and improving chromatic variety without obtaining special effects.

Ferro Spain, S.A. (Bol. Soc. Esp. Ceram. Vid. 2011, 50(2), XXVII) has developed a series of 3D inks applied by means of the digital ink-jet technique on different types of enamels which allow obtaining lustrous and metallic effects. These effects are obtained by means of forming crystalline structures by the interaction of the inks (based on frits such as mullite or cordierite for example) with the enamel. However, this technique requires developing a suitable enamel composition for each type of ink (or frit) applied so that said interaction takes place. This widely limits the variety of obtainable effects and chromatic range.

A latent difficulty in transferring the production of effects of this type to the digital ink-jet technique therefore exists given its clear dependency on the enamel composition and on the firing cycle, limiting its industrial production. Neither have techniques completely compatibles with the digital ink-jet technique for obtaining optical interference effects for ceramics been developed up until now.

Therefore, there is a clear need for developing a new method completely compatible with the digital ink-jet technique for the purpose of obtaining a greater variety of optical effects and chromatic variety. Said method must not be further limited by the enamel composition or by the firing cycle.

### Brief Description of the Invention

The aim of this invention is to develop a new method for obtaining optical interference effects by means of the digital ink-jet technique.

The authors of the present invention have surprisingly found that by means of applying sub-micrometric "ink-jet effect inks" with a high refraction index on an interphase based on aluminosilicates of laminar morphology with a low refraction index and sub-micrometric particle size and subsequent firing of the treated part, optical interference effects are obtained on the surface of said part.

The optical interference effects which are obtained by means of the method of the present invention are effects with a wide chromatic diversity and variety greater than those envisaged with the already known conventional ink-jet inks or pigmented ink-jet inks for conventional ceramics and enamels.

Therefore, said method allows widening the chromatic range and digital ink-jet decoration possibilities when it is combined with conventional enamels and inks, whether they are ink-jet or not, especially if the "ink-jet effect ink" is superimposed on conventional ink-jet inks applied previously on the interphase.

Conventional ink-jet ink or pigmented ink-jet ink for ceramics consists of a suspension of ceramic pigment for being projected by means of ink-jet technology. Said ceramic pigments are widely known in the state of the art. Illustrative but non-limiting examples of ceramic pigments are complex metal oxides with a spinel, zirconate, cassiterite and corundum type structure and mixtures thereof.

Various streaking, parchment, speckling, variegated, etc., type aesthetic effects, in addition to changes in colour, can additionally be obtained on the surface by means of the enamel - interphase - "ink-jet-effect ink" interaction. These effects are achieved by adjusting the thickness of the layer and the drying speed of the enamel with organic/inorganic additives. An illustrative but non-limiting example of an organic additive is carboxymethylcellulose. Clays are an illustrative but non-limiting example of an inorganic additive.

Furthermore, this method does not depend on the enamel composition. Therefore, the interphase which is used in this method can be applied on any enamelled ceramic, glass or metallic surface.

Other additional advantages of the method of the present invention are:
- it does not use noble metals (Au, Pt, Rh, Ag, etc) which greatly increase the cost of the finish,
- the interphase used is based on natural aluminosilicates, although synthetic materials offering a similar performance can also be used,
- the finish obtained by means of this method provides greater chemical resistance (for example, to etching) and greater mechanical resistance on the treated surface, with respect to the conventional techniques used for obtaining effects of this type.

Therefore, according to a first aspect, the present invention is aimed at a method for obtaining optical interference effects on enamelled or non-enamelled ceramic or glass surfaces or enamelled metal surfaces comprising the following steps:
a) depositing an interphase comprising aluminosilicate particles with a refraction index less than or equal to 1.7 and with a laminar morphology where at least 90% of said particles have a particle size between 0.1 µm and 1 µm, in the form of a thin layer with a thickness comprised between 5-100 µm, on the surface to be treated by means of any conventional ceramic, glass or metal deposition technique,
b) applying "ink-jet effect inks" comprising particles with a size between 10 nm and 1 µm and a refraction index greater than or equal to 1.8 by means of the digital ink-jet technique on the interphase deposited in the previous step, and
c) subjecting the treated part to thermal treatment with a temperature comprised between 700 and 1300°C.

The method object of the present invention can be applied on enamelled or non-enamelled ceramic or glass or enamelled metal parts, preferably on ceramic parts.

Therefore, according to a second aspect, the present invention is aimed at a ceramic, glass or metal product resulting from the method of the invention.

A third aspect of the invention is related to the use of the ceramic, glass or metal product obtained by the method of the invention for preparing decorative parts in the construction (ceramic and glass), electrical household appliance or automobile sectors, or for the industrial sectors generally requiring this type of application.

### Detailed Description of the Invention

The objective of the present invention consists of obtaining optical interference effects on ceramic surfaces by means of the digital ink-jet technique.

In the context of the present invention, the term "optical interference effect" refers to changes in shade and saturation of colour when the angle of light or observation changes on the surface giving rise to iridescence, multicolour or metallic phenomena.

Likewise, the term "digital ink-jet technique" refers to a printing technique widely known in state of the art consisting of projecting microdrops directly onto a specified position in a substrate for creating an image.

The objective of the present invention is met by means of a method for obtaining optical interference effects on enamelled or non-enamelled ceramic or glass surfaces or enamelled metal surfaces comprising the following steps:
a) depositing an interphase comprising aluminosilicate particles with a refraction index less than or equal to 1.7 and with a laminar morphology where at least 90% of said particles have a particle size between 0.1 µm and 1 µm, in the form of a thin layer with a thickness comprised between 5-100 µm, on the surface to be treated by means of any conventional ceramic, glass or metal deposition technique,
b) applying "ink-jet effect inks" comprising particles with a size between 10 nm and 1 µm and a refraction index greater than or equal to 1.8 by means of the digital ink-jet technique on the interphase deposited in the previous step, and
c) subjecting the treated part to thermal treatment with a temperature comprised between 700 and 1300°C.

In the context of the present invention the term "thermal treatment" refers to firing.

Throughout this entire process a physicochemical transformation takes place in the treated surface due to its interaction with the layer of "ink-jet effect inks" and the layer of the interphase. This transformation gives rise to micro-structural changes in the treated surface, forming thin films and micro-crosslinked structures, favouring the so-called optical interference effects therein.

In an additional step, the method comprises applying a film of organic material, such as for example polymeric fixing agents, on the interphase of step a) for modifying the appearance or the colour of the "ink-jet effect ink" applied in step b).

Without being bound by any particular theory, it is believed that these effects which are perceived in the finished part can be due to a combination of refraction and diffraction phenomena which the light encounters in its trajectory as well as constructive and destructive interferences caused by the double-layer structure.

In a particular embodiment the "ink-jet effect ink" is combined with or superimposed on conventional ink-jet inks or pigmented ink-jet inks for ceramics. Conventional ink-jet inks alone or combined with "ink-jet effect inks" can either be applied directly on the interphase or on the interphase on which a film of organic material has been superimposed for modifying the appearance or the colour of the "ink-jet effect ink".

In one embodiment, the invention relates to a method as defined above, in which the part to be treated is an enamelled or non-enamelled ceramic part. In the case of enamelled ceramic parts, the enamel is preferably a conventional vitrifiable enamel or not. These enamels are widely known in the case of ceramic tiles for flooring and coverings, there is a wide variety and they adapt to the usual firing cycles for stoneware, porcelain, mono-porous materials, etc.

In a particular embodiment, the enamelled or non-enamelled ceramic part to be treated can previously be thermally treated or not.

In another embodiment, the invention relates to a method as defined above in which the part to be treated is an enamelled or non-enamelled glass part. In the context of the invention, the term "glass part" refers to a vitrified (glass) surface or thermally pre-treated enamelled part, known as third firing decoration. In the case of enamelled glass parts, the enamel is preferably a conventional vitrifiable enamel or not.

In another embodiment, the invention relates to a method as defined above, in which the part to be treated is an enamelled metal part. In the context of the invention the term "enamelled metal part" refers to a part of, for example, iron or steel sheet with enamels intended for decoration. In the case of enamelled metal parts, the enamel is preferably a conventional vitrifiable enamel or not.

In the context of the invention, the term "conventional vitrifiable enamel" refers to engobes, transparent/opaque enamels, glossy/matte enamels, enamels with or without frit, coloured or non-coloured enamels and enamels which are normally used in the different enamelling processes of each technique.

In another particular embodiment, the ceramic, glass or metal part to be treated can be coloured or non-coloured.

The products resulting from the method object of the present invention can have improved chemical and mechanical resistance properties compared with the products treated by means of conventional techniques.

### Interphase of the invention

In the scope of the present invention "interphase" is understood as a composition comprising aluminosilicate particles with a refraction index less than or equal to 1.7 and with a laminar morphology where at least 90% of said particles have a particle size between 0.1 µm and 1 µm.

In the context of the invention, the term "aluminosilicate" refers to both natural mineral aluminosilicates and to synthetic materials offering a performance similar to that of natural aluminosilicate mineral.

The interphase is deposited on the enamelled or non-enamelled surface to be treated by means of conventional deposition techniques in the form of a liquid suspension in a carrier defined according to the needs of each technique. Non-limiting examples of conventional ceramic, glass or metal deposition techniques are disc, airless, flat or rotary screen printing, ink-jet techniques or any other equivalent technique.

When the interphase is deposited on a surface, it is in the form of a thin layer with a thickness comprised between 5-100 µm. In the end product, said layer is comprised between two phases, ergo the name interphase, i.e., between the enamelled or non-enamelled surface to be treated and the "ink-jet effect inks" combined with conventional inks or not. The method object of the present invention therefore comprises depositing an interphase with a refraction index less than or equal to 1.7 and with a laminar morphology where at least 90% of said particles have a particle size between 0.1 µm and 1 µm in the form of a thin layer with a thickness comprised between 5-100 µm, on the surface to be treated by means of any conventional deposition technique.

In a preferred embodiment, the thickness of the layer of the interphase is between 7 and 20 µm.

In the scope of the present invention, low refraction index is understood as a refraction index between 1.3 and 1.7. According to a particular embodiment, the refraction index of the interphase is less than or equal to 1.6.

The particles of the interphase are aluminosilicates with a laminar morphology, and according to a particular embodiment they are alkaline feldspar type aluminosilicates, which are preferably selected from albite and petalite.

### "Ink-jet effect inks" of the invention

The method object of the present invention further comprises applying "ink-jet effect inks" with a particle size between 10 nm and 1 µm and a high refraction index by means of the digital ink-jet technique on the previously applied interphase.

The "ink-jet effect inks" of the method object of the present invention are further characterised in that they comprise:
a) an inorganic solid fraction comprising at least one metal oxide; and
b) an organic or aqueous liquid fraction.

According to a particular embodiment, the particle size distribution of the "ink-jet effect inks" is between 10 nm and 1 µm, preferably between 30 nm and 1 µm, even more preferably between 30 nm and 500 nm.

The particles of the "ink-jet effect inks" of the invention are particles of a metal oxide.

According to a particular embodiment, the metal oxide of the inorganic solid fraction is selected from simple metal oxides, preferably TiO₂ Fe₂O₃, CuO, CeO₂, and mixtures thereof, with eventual additions of ceramic pigments.

In one embodiment, the "ink-jet effect inks" of the method object of the present invention comprise an organic liquid fraction comprising at least one organic solvent. Any organic solvent known in state of the art compatible with the ink-jet technique can be used. In a particular embodiment the solvent is selected from glycol ethers. The organic fraction can further comprise dispersants and surfactants to a lesser extent.

According to another embodiment, the liquid fraction of the ink-jet inks of the method object of the present invention can be aqueous or can contain water.

The ink-jet inks of the method object of the present invention are further characterised by comprising between 10-60% by weight of the inorganic solid fraction and between 90-40% by weight of the liquid fraction. Both fractions are mixed until obtaining a uniform dispersion giving rise to a homogenous suspension. Said suspension is applied by means of the ink-jet technique.

In the scope of the present invention, high refraction index is understood as a refraction index greater than or equal to 1.8, preferably between 1.8 and 3, and more preferably between 1.8 and 2.5.

### Examples

### Example 1: Decoration of a ceramic tile for flooring and covering in white monoporous paste.

Firstly, the engobe was applied on the raw ceramic support. Said engobe was applied by means of the disc technique with a density of 1.6 gr/cm³ (450 grs/m²).

A coloured crystalline enamel with 3% black pigment was applied on said engobed part. Said coloured enamel was applied by means of the bell technique at a density of 1.8 gr/cm³ (700 grs/m²).

The "interphase" was deposited in the form of a suspension on the previous layer of enamel by means of 120 thread mesh flat screen printing. Said suspension was prepared from albite with a particle size between 0.1 to 1 µm (20%) and PEG200 (80%).

The "ink-jet-effect ink" with a solid fraction of Fe₂O₃ with a particle size between 30 and 500 nm was applied on the interphase by means of a digital plotter and a 45 picolitre drop piezoelectric ink-jet head.

Finally, a fast firing cycle was performed in a roller furnace at 1140°C and for 45 minutes.

Result: Ceramic tile with metallic surface appearance with reddish iridescences.

### Example 2: Decoration of black coloured porcelain stoneware.

An interphase formed by a suspension of 40% albite with a particle size between 0.1 to 1 µm and 60% water at a ratio of 65 grs/m² is applied on a ceramic support by means of the airless technique.

The conventional brown ink-jet ink was deposited on the layer of the interphase by means of a plotter and 45 picolitre drop piezoelectric ink-jet head.

The TiO₂ "ink-jet-effect ink" with a particle size between 30 and 500 nm is applied on the previous layer of conventional ink-jet ink by means of a digital plotter and 45 picolitre drop piezoelectric ink-jet head.

Finally, a thermal firing treatment of the part is performed in a roller furnace at 1200°C and for a 55 minute cycle.

Result: Porcelain stoneware support with golden/metallic optical effect, dark effect.

## Claims

1. A method for obtaining optical interference effects on enamelled or non-enamelled ceramic or glass surfaces, or enamelled metal surfaces comprising the following steps:
a) depositing an interphase comprising aluminosilicate particles with a refraction index less than or equal to 1.7 and with a laminar morphology where at least 90% of said particles have a particle size between 0.1 µm and 1 µm, in the form of a thin layer with a thickness comprised between 5-100 µm, on the surface to be treated by means of any conventional ceramic, glass or metal deposition technique,
b) applying "ink-jet effect inks" comprising particles with a size between 10 nm and 1 µm and a refraction index greater than or equal to 1.8 by means of the digital ink-jet technique on the interphase deposited in the previous step, and
c) subjecting the treated part to thermal treatment with a temperature comprised between 700 and 1300°C.

2. The method according to claim 1, wherein the refraction index n of the interphase of step a) is comprised between 1.3 and 1.6.

3. The method according to any of claims 1 to 2, wherein the particles of the interphase of step a) are an aluminosilicate with alkaline feldspar type laminar morphology.

4. The method according to claims 3, wherein the particles of the interphase of step a) are selected from albite and petalite.

5. The method according to any of claims 1 to 4, wherein the interphase of step a) is applied by means of a conventional ceramic, glass or metal deposition technique selected from disc, airless, flat or rotary screen printing, ink-jet technique and any other equivalent technique.

6. The method according to any of claims 1 to 5, wherein the "ink-jet effect inks" of step b) comprise:
a) an inorganic solid fraction comprising at least one metal oxide, and
b) an organic or aqueous liquid fraction;
**characterised in that** said ink comprises between 10-60% by weight of the inorganic solid fraction and between 40-90% by weight of the preferably organic liquid fraction for forming a homogenous suspension.

7. The method according to claims 6, wherein the metal oxides of the inorganic solid fraction are preferably selected from TiO₂ Fe₂O₃, CuO, CeO₂ and mixtures thereof; with eventual additions of ceramic pigments.

8. The method according to any of claims 1 to 7, wherein the organic liquid fraction of the "ink-jet effect inks" of step b) can contain water.

9. The method according to any of claims 1 to 8, wherein in step b) the ink-jet effect ink is applied together with and/or superimposed on conventional ink-jet inks.

10. The method according to any of claims 1 to 9, comprising an additional step wherein a film of organic material is applied on the interphase of step a) for modifying the appearance or the colour of the "ink-jet effect ink" applied in step b).

11. The method according to any of claims 1 to 10, wherein the part to be treated is an enamelled or non-enamelled ceramic part.

12. The method according to any of claims 1 to 10, wherein the part to be treated is an enamelled or non-enamelled glass part.

13. The method according to any of claims 1 to 10, wherein the part to be treated is an enamelled metallic part.

14. A ceramic, glass or metallic product resulting from the method according to any of claims 1-13.

15. Use of the ceramic, glass or metallic product according to claim 14 for preparing decorative parts in the construction, electrical household appliance or automobile sectors, or for industrial sectors in general requiring this type of application.

## Patentansprüche

1. Verfahren, um optische Interferenzeffekte auf emaillierten oder auf nicht emaillierten Keramik- oder Glasoberflächen oder auf emaillierten Metalloberflächen zu erhalten, wobei das Verfahren die folgenden Schritte aufweist:
a) ein Abscheiden einer Zwischenphase, welche Alumosilikat-Teilchen mit einem Brechungsindex von kleiner als oder gleich 1,7 und mit einer laminaren Morphologie, wobei mindestens 90 % der Teilchen eine Teilchengröße zwischen 0,1 µm und 1 µm aufweisen, in der Form einer dünnen Schicht mit eine Dicke zwischen 5 bis100 µm auf der Oberfläche aufweist, welche mit einem beliebigen herkömmlichen Verfahren zur Abscheidung einer Keramik, eines Glases oder eines Metalls zu behandeln ist,
b) ein Aufbringen von "Tintenstrahl-Effekttinten", welche Teilchen mit einer Größe zwischen 10 nm und 1 µm und einem Brechungsindex größer als oder gleich 1,8 aufweisen, mittels eines digitalen Tintenstrahlverfahrens auf die Zwischenphase, welche in dem vorherigen Schritt abgeschieden worden ist, und
c) ein Unterziehen des behandelten Teils einer thermischen Behandlung mit einer Temperatur, welche zwischen 700 und 1300 °C liegt.

2. Verfahren nach Anspruch 1, wobei der Brechungsindex n der Zwischenphase bei dem Schritt a) zwischen 1,3 und 1,6 liegt.

3. Verfahren nach einem der Ansprüche 1 bis 2, wobei die Teilchen der Zwischenphase bei dem Schritt a) ein Aluminosilikat mit einer laminaren Morphologie vom Typ alkalischer Feldspat sind.

4. Verfahren nach Anspruch 3, wobei die Teilchen der Zwischenphase bei dem Schritt a) aus einem Albit und einem Petalit ausgewählt worden sind.

5. Verfahren nach einem der Ansprüche 1 bis 4, wobei die Zwischenphase bei dem Schritt a) mit Hilfe eines herkömmlichen Verfahren zur Abscheidung einer Keramik, eines Glases oder eines Metall aufgebracht wird, wobei das Verfahren aus einem Scheibenverfahren, einem luftlosen Verfahren, einem Flach- oder einem Rotationssiebdruck-Verfahren, einem Tintenstrahldruckverfahren und anderen äquivalenten Verfahren ausgewählt wird.

6. Verfahren nach einem der Ansprüche 1 bis 5, wobei die "Tintenstrahl-Effekttinten" bei dem Schritt b) aufweisen:
a) einen Anteil an anorganischen Feststoffen, welche mindestens ein Metalloxid aufweisen, und
b) einen Anteil an organischen oder an wässrigen flüssigen Stoffen,
**dadurch gekennzeichnet, dass** die Tinte zwischen 10 bis 60 Gewichtsprozent des Anteils an anorganischen Feststoffen und zwischen 40 bis 90 Gewichtsprozent des Anteils an organischen oder wässrigen flüssigen Stoffen aufweist, welche vorzugsweise eine homogene Suspension bilden.

7. Verfahren nach Anspruch 6, wobei die Metalloxide des Anteils an anorganischen Feststoffen vorzugsweise worden ausgewählt sind aus: einem TiO₂ einem Fe₂O₃, einem CuO, einem CeO₂ und Mischungen davon mit eventuellen Zusätzen von keramischen Pigmenten.

8. Verfahren nach einem der Ansprüche 1 bis 7, wobei der organische flüssige Anteil der "Tintenstrahl-Effekttinten" aus dem Schritt b) Wasser enthalten kann.

9. Verfahren nach einem der Ansprüche 1 bis 8, wobei in dem Schritt b) die Tintenstrahl-Effekttinte zusammen mit und / oder überlagert auf konventionellen Tintenstrahl-Tinten aufgebracht wird.

10. Verfahren nach einem der Ansprüche 1 bis 9, welches einen zusätzlichen Schritt aufweist, bei dem eine Schicht aus einen organischem Material auf die Zwischenphase aus dem Schritt a) zur Modifizierung des Aussehens oder der Farbe der "Tintenstrahl-Effekttinte" in dem Schritt b) anbracht wird.

11. Verfahren nach einem der Ansprüche 1 bis 10, wobei das Teil, das behandelt werden soll, ein emailliertes oder ein nicht emailliertes Keramikteil ist.

12. Verfahren nach einem der Ansprüche 1 bis 10, wobei das Teil, das behandelt werden soll, ein emailliertes oder ein nicht emailliertes Glasteil ist.

13. Verfahren nach einem der Ansprüche 1 bis 10, wobei das Teil, das behandelt werden soll, ein emailliertes Metallteil ist.

14. Keramik, Glas oder metallisches Produkt, das sich aus dem Verfahren nach einem der Ansprüche1 bis 13 ergibt.

15. Verwendung der Keramik, des Glases oder des Metallprodukts nach Anspruch 14 für dekorative Teile bei einem Bau, bei einem elektrischen Haushaltsgerät oder im Automobilbereich oder im Allgemeinen für die industriellen Sektoren, welche diese Art von Anwendung erfordern.

## Revendications

1. Procédé pour obtenir des effets d'interférence optique sur des surfaces de céramique ou de verre émaillées ou non émaillées, ou des surfaces métalliques émaillées comportant les étapes suivantes consistant à :
a) déposer une interphase comportant des particules d'aluminosilicate ayant un indice de réfraction inférieur ou égal à 1,7 et présentant une morphologie laminaire où au moins 90 % desdites particules ont une taille de particules comprise entre 0,1 µm et 1 µm, sous la forme d'une couche mince ayant une épaisseur comprise entre 5 et 100 µm, sur la surface à traiter au moyen d'une technique habituelle de dépôt de céramique, de verre ou de métal,
b) appliquer des "encres à effet de jet d'encre" comportant des particules ayant une taille comprise entre 10 nm et 1 µm et un indice de réfraction supérieur ou égal à 1,8 au moyen de la technique de jet d'encre numérique sur l'interphase déposée à l'étape précédente, et
c) soumettre la pièce traitée à un traitement thermique à une température comprise entre 700 et 1 300 °C.

2. Procédé selon la revendication 1, dans lequel l'indice de réfraction n de l'interphase de l'étape a) est compris entre 1,3 et 1,6.

3. Procédé selon l'une quelconque des revendications 1 à 2, dans lequel les particules de l'interphase de l'étape a) sont un aluminosilicate ayant une morphologie laminaire de type feldspath alcalin.

4. Procédé selon la revendication 3, dans lequel les particules de l'interphase de l'étape a) sont choisies parmi l'albite et la pétalite.

5. Procédé selon l'une quelconque des revendications 1 à 4, dans lequel l'interphase de l'étape a) est appliquée au moyen d'une technique habituelle de dépôt de céramique, de verre ou de métal choisi parmi une technique à disque, sans air, d'impression au cadre rotatif ou à plat, de jet d'encre et toute autre technique équivalente.

6. Procédé selon l'une quelconque de revendications 1 à 5, dans lequel les "encres à effet de jet d'encre" de l'étape b) comportent :
a) une fraction solide inorganique comportant au moins un oxyde métallique, et
b) une fraction liquide organique ou aqueuse,
**caractérisé en ce que** ladite encre comporte entre 10 et 60 % en poids de la fraction solide inorganique et entre 40 et 90 % en poids de la fraction liquide de préférence organique pour former une suspension homogène.

7. Procédé selon la revendication 6, dans lequel les oxydes métalliques de la fraction solides inorganique sont de préférence choisis parmi TiO₂, Fe₂O₃, CuO, CeO₂ et des mélanges de ceux-ci, avec d'éventuelles additions de pigments céramiques.

8. Procédé selon l'une quelconque des revendications 1 à 7, dans lequel la fraction liquide organique des "encres à effet de jet d'encre" de l'étape b) peut contenir de l'eau.

9. Procédé selon l'une quelconque des revendications 1 à 8, dans lequel à l'étape b), l'encre à effet de jet d'encre est appliquée associée et/ou superposée à des encres à jet d'encre habituelles.

10. Procédé selon l'une quelconque des revendications 1 à 9, comportant une étape supplémentaire dans laquelle un film de matière organique est appliqué sur l'interphase de l'étape a) pour modifier l'aspect ou la couleur de "l'encre à effet de jet d'encre" appliquée à l'étape b).

11. Procédé selon l'une quelconque des revendications 1 à 10, dans lequel la pièce à traiter est une pièce en céramique émaillée ou non émaillée.

12. Procédé selon l'une quelconque des revendications 1 à 10, dans lequel la pièce à traiter est une pièce en verre émaillée ou non émaillée.

13. Procédé selon l'une quelconque des revendications 1 à 10, dans lequel la pièce à traiter est une pièce métallique émaillée.

14. Produit en céramique, en verre ou métallique résultant du procédé selon l'une quelconque des revendications 1 à 13.

15. Utilisation du produit en céramique, en verre ou métallique selon la revendication 14 pour préparer des pièces décoratives dans les secteurs de la construction, des appareils domestiques électriques ou de l'automobile, ou pour des secteurs industriels nécessitant généralement ce type d'application.
